(19) **Europäisches Patentamt / European Patent Office / Office européen des brevets**

(11) **EP 2 251 378 A1**

(12) **EUROPEAN PATENT APPLICATION**
published in accordance with Art. 153(4) EPC

(43) Date of publication:
**17.11.2010 Bulletin 2010/46**

(21) Application number: **09717977.4**

(22) Date of filing: **16.02.2009**

(51) Int Cl.:
*C08L 67/00* (2006.01)  *C08K 5/00* (2006.01)
*C08K 5/101* (2006.01)  *C08K 5/29* (2006.01)
*C08L 101/16* (2006.01)

(86) International application number:
**PCT/JP2009/000586**

(87) International publication number:
**WO 2009/110171 (11.09.2009 Gazette 2009/37)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **03.03.2008 JP 2008052070**

(71) Applicant: **UNITIKA LTD.**
**Amagasaki-shi**
**Hyogo 660-0824 (JP)**

(72) Inventors:
- **KAWAHARA, Mitsuhiro**
  **Kyoto, 611-0021 (JP)**
- **SAIJO, Takehito**
  **Kyoto, 611-0021 (JP)**
- **UEDA, Kazue**
  **Kyoto, 611-0021 (JP)**

(74) Representative: **Kügele, Bernhard**
**Novagraaf International SA**
**25, avenue du Pailly**
**CH-1220 Les Avanchets-Genève (CH)**

(54) **BIODEGRADABLE POLYESTER RESIN COMPOSITION AND MOLDED BODY COMPOSED OF THE SAME**

(57) Disclosed is a biodegradable polyester resin composition, wherein 100 parts by mass of a biodegradable polyester resin is blocked at the terminals thereof with 0.1 to 10 parts by mass of a carbodiimide compound, and the biodegradable polyester resin composition includes 0.1 to 10 parts by mass of a jojoba oil in relation to 100 parts by mass of the biodegradable polyester resin.

EP 2 251 378 A1

**Description**

Technical Field

The present invention relates to a biodegradable polyester resin composition and a molded body obtained from the same.

Background Art

Nowadays, from the viewpoint of environmental preservation, biodegradable resins including polylactic acid are attracting attention. Among biodegradable resins, polylactic acid is satisfactory in transparency and is one of the resins having the highest heat resistance; polylactic acid can be mass produced from raw materials derived from plants such as corn and sweet potato and hence is low in cost; further, polylactic acid can contribute to the reduction of the consumption amount of petroleum raw materials and hence is high in usefulness.

However, polylactic acid has a drawback of being low in durability in long-term use. In particular, under high temperature and high humidity, this tendency is extremely remarkable. The hydrolysis reaction of polylactic acid proceeds under the catalytic action of the carboxyl groups at the molecular chain terminals, and in particular, the hydrolysis reaction proceeds in an accelerated manner under high temperature and high humidity. Therefore, a molded body produced with polylactic acid as a single substance is insufficient in the durability in long-term use and insufficient in the storage stability under high temperature and high humidity, to disadvantageously lead to the strength reduction and molecular weight decrease caused by the deterioration due to the use in a long term or under high temperature and high humidity, and thus such a molded body is not able to cope with long-term use or use under the conditions of high temperature and high humidity.

As a method for solving this problem, JP2001-261797A discloses a technique for improving the hydrolytic resistance by blocking with a specific carbodiimide compound the carboxyl terminals of polylactic acid. However, this technique provides insufficient hydrolytic resistance probably because of the possibility that this technique cannot block with a carbodiimide compound all the carboxyl terminals so as to leave some of the carboxyl terminals unblocked.

JP2004-155993A discloses a technique for improving the hydrolytic resistance of polylactic acid by using a carbodiimide compound in combination with additives such as an ultraviolet absorber, an antioxidant and a heat stabilizer. This technique improves the hydrolytic resistance without failure as compared to the case where a carbodiimide compound is used alone. However, when the number of types of the additives or the amounts of the additives are increased in order to improve the hydrolytic resistance, the production process is complicated or made higher in cost. It is preferable to obtain a polylactic acid resin composition having a sufficient hydrolytic resistance, without increasing the number of the types of the additives and the addition amounts of the additives.

WO 2007/029574 discloses a resin composition containing polylactic acid and a jojoba oil, for the purpose of improving the hydrolytic resistance of polylactic acid.

Disclosure of the Invention

Problems to be Solved by the Invention

The present invention solves the above-described problems and an object of the present invention is to provide a biodegradable polyester resin composition excellent in hydrolytic resistance and a molded body composed of the biodegradable polyester resin composition.

Means for Solving the Problems

The present inventors performed a continuous diligent study for the purpose of solving the above-described problems and have reached the present invention by discovering that a resin composition significantly improved in hydrolytic resistance is obtained by blocking a biodegradable polyester resin at the terminals thereof with a carbodiimide compound and also by adding a jojoba oil to the biodegradable polyester resin composition.

The gist of the present invention is as follows.

(1) A biodegradable polyester resin composition, wherein 100 parts by mass of a biodegradable polyester resin is blocked at the terminals thereof with 0.1 to 10 parts by mass of a carbodiimide compound, and the biodegradable polyester resin composition includes 0.1 to 10 parts by mass of a jojoba oil in relation to 100 parts by mass of the biodegradable polyester resin.

(2) The biodegradable polyester resin composition according to (1), further including 0.03 to 5 parts by mass of a crystal nucleating agent in relation to 100 parts by mass of the biodegradable polyester resin.

(3) The biodegradable polyester resin composition according to (2), wherein the crystal nucleating agent is composed of one or more selected from an organic amide compound, an organic hydrazide compound, a carboxylic acid ester compound, an organic sulfonic acid salt, a phthalocyanine compound, a melamine compound and an organic phosphonic acid salt.

(4) The biodegradable polyester resin composition according to (2), wherein the crystal nucleating agent is composed of one or more selected from a metal salt of dimethyl 5-sulfoisophthalate, N,N',N''-tricyclohexyl trimesic acid amide, N,N'-ethylenebis(12-hydroxystearic acid) amide and octane dicarboxylic acid dibenzoylhydrazide.

(5) The biodegradable polyester resin composition according to any one of (1) to (4), wherein 100 parts by mass of the biodegradable polyester resin is crosslinked by 0.05 to 10 parts by mass of a (meth)acrylic acid ester compound and 0.1 to 20 parts by mass of a peroxide.

(6) The biodegradable polyester resin composition according to any one of (1) to (5), wherein the flexural strength retention rate of the biodegradable polyester resin composition is 80% or more when the biodegradable polyester resin composition has been maintained for 840 hours under the conditions of 70°C and a relative humidity of 95%.

(7) A molded body formed of the biodegradable polyester resin composition according to any one of (1) to (6).

(8) A method for producing a biodegradable polyester resin composition, wherein when the biodegradable polyester resin composition according to any one of (1) to (6) is produced, a carbodiimide compound and a jojoba oil are added to the biodegradable polyester resin at the time of melt-kneading or at the time of molding a molded body by using a resin composition to which the carbodiimide compound and the jojoba oil are not added.

Advantages of the Invention

According to the present invention, it is possible to obtain a biodegradable polyester resin composition excellent in hydrolytic resistance. Additionally, a biodegradable polyester resin has biodegradability, and hence can be compostized when the biodegradable polyester resin is discarded, to enable reduction of waste amount and recycling as fertilizer. Further, when the biodegradable polyester resin is, for example, polylactic acid, the biodegradable polyester resin is derived from plants, and hence can contribute to alleviation of environmental load and prevention of depletion of petroleum resources.

Best Mode for Carrying Out the Invention

Hereinafter, the present invention is described in detail.
Examples of the biodegradable polyester resin in the present invention include aliphatic polyesters containing an α- and/or a β-hydroxycarboxylic acid unit as the main component thereof and polyesters each composed of an aliphatic dicarboxylic acid component and an aliphatic diol component.
Examples of the α- and/or the β-hydroxycarboxylic acid unit include: D-lactic acid, L-lactic acid and mixtures of these; and glycolic acid, 3-hydroxybutyric acid, 3-hydroxyvaleric acid, 3-hydroxycaproic acid, and mixtures and copolymers of these. Particularly preferable among these are D-lactic acid and L-lactic acid.

Examples of the aliphatic dicarboxylic acid may include oxalic acid, succinic acid, glutaric acid, adipic acid, suberic acid, sebacic acid, dodecanoic acid, and lower alkyl ester compounds and acid anhydrides as the derivatives of these acids. Preferable among these are succinic acid, succinic acid anhydride and adipic acid.

Examples of the aliphatic diol include ethylene glycol, 1,4-butanediol and 1,6-hexanediol. Particularly preferable is 1,4-butanediol.

As long as the biodegradability of the polyester resin is not impaired, the polyester resin may be copolymerized with aromatic dicarboxylic acids such as terephthalic acid and isophthalic acid. Such copolymerized polyesters are also included in the biodegradable polyester resin as referred to in the present invention.

In the present invention, specific examples of the biodegradable polyester resin include, in addition to poly(D-lactic acid) and poly(L-lactic acid): aliphatic polyesters composed of diols and dicarboxylic acids typified by poly(ethylene succinate), poly(butylene succinate), poly(butylene succinate-co-butylene adipate) and the like; polyhydroxy carboxylic acids such as polyglycolic acid, poly(3-hydroxybutyric acid), poly(3-hydroxyvaleric acid) and poly(3-hydroxycaproic acid); poly($\omega$-hydroxyalkanoate) typified by poly($\epsilon$-caprolactone) or poly($\delta$-valerolactone); polyester resins containing aromatic components such as poly(butylene succinate-co-butylene terephthalate) and poly(butylene adipate-co-butylene terephthalate); polyester amides; polyester carbonates; and polysaccharides such as starch. One or two or more of these components may be used, and these components may also be mixed and may also be copolymerized.

The use, as the biodegradable polyester resin, of a resin containing a resin composed of plant-derived materials in a proportion of 50% by mass or more is preferable because such a biodegradable polyester resin has a high plant-derived proportion and hence has a high effect in reducing the proportion of petroleum resources. The proportion of the resin composed of plant-derived materials is more preferably 60% by mass or more and furthermore preferably 80% by mass or more. Examples of the biodegradable polyester resin containing monomers composed of plant-derived materials include polylactic acid and poly(butylene succinate). The use of polylactic acid as the resin composed of plant-derived materials is particularly preferable because of the improvement of moldability, transparency and heat resistance. Examples of polylactic acid may include poly(L-lactic acid), poly(D-lactic acid), and the mixtures, copolymers or stereocomplex eutectic mixtures of these. In consideration of the easiness in industrial production, polylactic acid is preferably such that the ratio L/D = 0.05/99.95 to 99.95/0.05 (mol%). Polylactic acid falling within this range of L/D can be used without any restriction.

The biodegradable polyester resin is produced by using a heretofore known melt polymerization method, or alternatively by additionally using a solid phase polymerization method in combination. Poly(3-hydroxybutyric acid), poly(3-hydroxyvaleric acid) and the like can be microbially produced.

In the present invention, the molecular weight of the biodegradable polyester resin is not particularly limited. For example, polylactic acid having a weight average molecular weight (Mw) falling within a range from 50000 to 300000 may be preferably used. The weight average molecular weight of polylactic acid is more preferably within a range from 80000 to 250000 and more preferably within a range from 100000 to 200000. The Mw is a value determined at 40°C relative to polystyrene standards by using a gel permeation chromatography (GPC) apparatus equipped with a differential refractive index detector and by using tetrahydrofuran as the eluent.

Additionally, when the melt viscosity is used as an index for molecular weight, the melt flow index (MFI) at 190°C under a load of 21.2 N (2.16 kg) preferably falls within a range from 0.1 to 50 g/10 min and more preferably within a range from 0.2 to 40 g/10 min.

The biodegradable polyester resin used in the present invention may be partially crosslinked, and may also be modified with an epoxy compound and the like.

Examples of the carbodiimide compound used in the present invention are described.

Examples of the monocarbodiimide having one carbodiimide group in one molecule thereof include: N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, N,N'-di-p-tolylcarbodiimide, p-phenylene-bis-di-o-tolylcarbodiimide, p-phenylene-bis-dicyclohexylcarbodiimide, hexamethylene-bis-dicyclohexylcarbodiimide, ethylene-bis-diphenylcarbodiimide, N,N'-benzylcarbodiimide, N-octadecyl-N'-phenylcarbodiimide, N-benzyl-N'-phenylcarbodiimide, N-octadecyl-N'-tolylcarbodiimide, N-cyclohexyl-N'-tolylcarbodiimide, N-phenyl-N'-tolylcarbodiimide, N-benzyl-N'-tolylcarbodiimide, N,N'-di-o-ethylphenylcarbodiimide, N,N'-di-p-ethylphenylcarbodiimide, N,N'-di-o-isopropylphenylcarbodiimide, N,N'-di-p-isopropylphenylcarbodiimide, N,N'-di-o-isobutylphenylcarbodiimide, N,N'-di-p-isobutylphenylcarbodiimide, N,N'-di-2,6-diethylphenylcarbodiimide, N,N'-di-2-ethyl-6-isopropylphenylcarbodiimide, N,N'-di-2-isobutyl-6-isopropylphenylcarbodiimide, N,N'-di-2,4,6-trimethylphenylcarbodiimide, N,N'-di-2,4,6-triisopropylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, t-butylisopropylcarbodiimide, di-β-naphthylcarbodiimide and di-t-butylcarbodiimide.

Examples of the polycarbodiimide having two or more carbodiimide groups in one molecule thereof include:

aromatic polycarbodiimides (for example, trade names: Stabaxol P and Stabaxol P-100, manufactured by Rhein Chemie Corp.) and aliphatic (alicyclic) polycarbodiimides (for example, trade name: Carbodilite LA-1, manufactured by Nisshinbo Industries, Inc.).

These carbodiimide compounds may be used each alone and may also be used in combinations of two or more thereof. In the present invention, from the viewpoint of improving the hydrolytic resistance, monocarbodiimides are preferable, and N,N'-di-2,6-diisopropylphenylcarbodiimide is particularly preferable.

The mixing amount of the carbodiimide compound is 0.1 to 10 parts by mass, preferably 0.5 to 8 parts by mass and more preferably 1 to 5 parts by mass in relation to 100 parts by mass of the biodegradable polyester resin. When the mixing amount is less than 0.1 part by mass, the long-term humidity-heat resistance and the exterior appearance stability intended by the present invention are not attained. Conversely, when the carbodiimide compound is used in a mixing amount exceeding 10 parts by mass, adverse effects are exerted on the other physical properties to result in, for example, strength decrease.

The larger the amount of the remaining carboxyl groups at the molecular chain terminals, the faster the hydrolysis reaction of polyester proceeds. Therefore, for the purpose of improving the hydrolytic resistance, the lower is the carboxyl group concentration (hereinafter, also represented by [COOH] as the case may be) in the resin composition, the more preferable. The carboxyl group concentration is preferably 3.0 mol/ton or less, more preferably 1.5 mol/ton or less and most preferably 1.0 mol/ton or less. The regulation of the carboxyl group concentration so as to fall within an appropriate range is enabled by appropriately regulating the carbodiimide group concentration in the carbodiimide compound or the addition amount of the carbodiimide compound. Examples of the method for measuring the carboxyl group concentration include a titration method and a nuclear magnetic resonance (NMR) method. The detailed measurement method is described later.

The jojoba oil in the present invention means the ester collected by expression and distillation from the seeds of natural jojoba (botanical name: Simmondasia Chinensis). This jojoba oil is composed of higher unsaturated fatty acids and higher unsaturated alcohols. Jojoba is an evergreen shrub naturally growing in the arid zones in the South West areas (Arizona State and California State) of the United States and in the northern Mexico (Sonora and Baja Areas), and is a dioecious plant being 60 to 180 cm in tree height, some jojoba trees reaching 3 m. Currently, jojoba is grown in the arid areas in Israel, Australia, Argentina and other countries as well as in the United States and Mexico.

Examples of the jojoba oil used in the present invention include a purified jojoba oil obtained by using the oil as prepared by expression and distillation from the seeds as described above and a hydrogenated jojoba oil obtained as a solid by hydrogenating the purified jojoba oil. In addition, any modified jojoba oil may also be used as long as such a modified jojoba oil is capable of forming a liquid jojoba alcohol or a cream-like jojoba cream by mixing with a resin.

The jojoba oil is as high as 420°C in boiling point; therefore, the jojoba oil persists stably in the resin even when mixed, for example, in the melt-kneading of the resin, requiring a high temperature.

The mixing amount of the jojoba oil is 0.1 to 10 parts by mass, preferably 0.2 to 5 parts by mass and more preferably 0.5 to 2 parts by mass in relation to 100 parts by mass of the biodegradable polyester resin. When the mixing amount is less than 0.1 part by mass, the humidity-heat resistance improvement due to the combinational use of the jojoba oil with carbodiimide, intended by the present invention, is not attained. Conversely, when the mixing amount exceeds 10 parts by mass, the jojoba oil bleeds out from a base material to remarkably degrade the physical properties.

When the crystallization speed of the biodegradable polyester resin composition is slow, a crystal nucleating agent is preferably used for the purpose of promoting crystallization in consideration of productivity. The crystal nucleating agent usable for that purpose is not particularly limited; however, from the viewpoint of the crystallization promotion effect, examples of the usable crystal nucleating agent may include one or more selected from an organic amide compound, an organic hydrazide compound, a carboxylic acid ester compound, an organic sulfonic acid salt, a phthalocyanine compound, a melamine compound and an organic phosphonic acid salt.

Examples of the organic amide compound and the organic hydrazide compound include hexamethylene bis-9,10-dihydroxystearic acid bisamide, p-xylylene bis-9,10-dihydroxystearic acid amide, decanedicarboxylic acid dibenzoylhydrazide, hexanedicarboxylic acid dibenzoylhydrazide, 1,4-cyclohexanedicarboxylic acid dicyclohexylamide, 2,6-naphthalenedicarboxylic acid dianilide, N,N',N"-tricyclohexyl trimesic acid amide, trimesic acid tris(t-butylamide), 1,4-cyclohexanedicarboxylic acid dianilide, 2,6-naphthalenedicarboxylic acid dicyclohexylamide, N,N'-dibenzoyl-1,4-diaminocyclohexane, N,N'-dicyclohexanecarbonyl-1,5-diaminonaphthalene, ethylenebisstearic acid amide, N,N'-ethylenebis (12-hydroxystearic acid) amide and octanedicarboxylic acid dibenzoylhydrazide.

From the viewpoints of the dispersibility in the resin and the heat resistance, preferable among these are N,N',N"-tricyclohexyl trimesic acid amide, N,N'-ethylenebis(12-hydroxystearic acid) amide and octanedicarboxylic acid dibenzoylhydrazide, and particularly preferable are N,N',N"-tricyclohexyl trimesic acid amide and N,N'-ethylenebis(12-hydroxystearic acid) amide.

Examples of the carboxylic acid ester compound include a monocarboxylic acid ester, an ethylene glycol monoester and an ethylene glycol diester, a glycerin monoester, a glycerin diester and glycerin triester; various carboxylic acid ester compounds can be used. Specific examples of the carboxylic acid ester compound include cetyl laurate, cetyl stearate, glycol monolaurate, glycol monostearate, glycol dilaurate, glycol dipalmitate, glycol distearate, glycerin monolaurate, glycerin monostearate, glycerin dilaurate, glycerin distearate, glycerin trilaurate and glycerin tristearate.

As the organic sulfonic acid salt, various salts such as sulfoisophthalic acid salt can be used. From the viewpoint of the crystallization promotion effect, preferable among these are metal salts of dimethyl 5-sulfoisophthalate; preferable are the sodium salt, the barium salt, the calcium salt, the strontium salt, the potassium salt, the rubidium salt and the like; and particularly preferable is sodium dimethyl 5-sulfoisophthalate.

As the phthalocyanine compound, various compounds can be used; however, metal complexes are preferably used, and preferable among these is copper phthalocyanine from the viewpoint of the crystallization promotion effect.

As the melamine compound, various compounds can be used; however, melamine cyanurate is preferably used from the viewpoint of the crystallization promotion effect.

As the organic phosphonic acid compound, preferable are the phenylphosphonic acid salts from the viewpoint of the crystallization promotion effect; particularly preferable among these is zinc phenylphosphonate.

As the crystal nucleating agent, the above-described compounds may be used each alone or in combinations of two or more thereof. When the above-described compounds are used in combination, these organic crystal nucleating agents may be used in combination with various inorganic crystal nucleating agents.

The mixing amount of the crystal nucleating agent is preferably 0.03 to 5 parts by mass and more preferably 0.1 to 4 parts by mass in relation to 100 parts by mass of the biodegradable polyester resin. When the mixing amount of the crystal nucleating agent is less than 0.03 part by mass, the effect of promoting crystallization is poor. On the other hand, when the crystal nucleating agent is mixed in an amount exceeding 5 parts by mass, the effect as the crystal nucleating agent is saturated, and such use is economically disadvantageous and is additionally unfavorable from the environmental viewpoint because of the increase of the residual after biodegradation.

In the present invention, the biodegradable polyester resin is preferably crosslinked by a (meth)acrylic acid ester compound and a peroxide. The crosslinking of the biodegradable polyester resin enables to promote the crystallization and to improve the heat resistance.

Preferable as the (meth)acrylic acid ester compound usable in the present invention are the compounds each having two or more (meth)acryl groups in the molecule thereof or having one or more (meth)acryl groups and one or more glycidyl groups or vinyl groups in the molecule thereof because such compounds are high in the reactivity with the biodegradable polyester resins and hence small in the amount of the residual monomers, are less toxic and scarcely cause the coloration of the resin. Specific examples of such compounds include glycidyl methacrylate, glycidyl acrylate, glycerol dimethacrylate, trimethylolpropane trimethacrylate, trimethylolpropane triacrylate, allyloxypolyethylene glycol monoacrylate, allyloxy(poly)ethylene glycol monomethacrylate, (poly)ethylene glycol dimethacrylate, (poly)ethylene glycol diacrylate, (poly)propylene glycol dimethacrylate, (poly)propylene glycol diacrylate, (poly)tetramethylene glycol dimethacrylate, the copolymers of these which are different in the alkylene length of the alkylene glycol moiety from each other, ethylene glycol dimethacrylate, ethylene glycol diacrylate, trimethylene glycol dimethacrylate, trimethylene glycol diacrylate, butanediol methacrylate and butanediol acrylate.

The addition amount of the (meth)acrylic acid ester compound is preferably 0.05 to 10 parts by mass and more preferably 0.05 to 1 part by mass in relation to 100 parts by mass of the biodegradable polyester resin. When the addition amount is less than 0.05 part by mass, the intended heat resistance is hardly attained. When the (meth)acrylic acid ester compound is added in an amount exceeding 10 parts by mass, the operability at the time of kneading tends to be degraded.

The peroxide is mixed for the purpose of promoting the crosslinking reaction between the (meth)acrylic acid ester compound and the biodegradable polyester resin to improve the heat resistance of the obtained biodegradable polyester resin composition. Examples of the peroxide include benzoyl peroxide, bis(butylperoxy)trimethylcyclohexane, bis(butylperoxy)cyclododecane, butyl bis(butylperoxy)valerate, dicumyl peroxide, butyl peroxybenzoate, dibutyl peroxide, bis(butylperoxy)diisopropylbenzene, dimethyldi(butylperoxy)hexane, dimethyldi(butylperoxy)hexyne and butylperoxycumene.

The addition amount of the peroxide is preferably 0.1 to 20 parts by mass and more preferably 0.2 to 10 parts by mass in relation to 100 parts by mass of the biodegradable polyester resin. When the addition amount is less than 0.1 part by mass, the intended effect is hardly attained. When the peroxide is added in an amount exceeding 20 part by mass, the operability at the time of kneading may be degraded.

Examples of the method for crosslinking the biodegradable polyester resin by using a (meth)acrylic acid ester compound and a peroxide include a method in which these substances are melt-kneaded. The melting temperature is required to be equal to or higher than the melting point or the flow initiation temperature of the biodegradable polyester resin. The optimal range is varied depending on the applied resin; for example, for polylactic acid, optimal is a range from 180 to 250°C and more preferably a range from 190 to 230°C. When the kneading temperature is too low, the degradation of the fluidity of the resin tends to result in overload of the apparatus. Conversely, when the kneading temperature is too high, disadvantageously polylactic acid is decomposed and thus the obtained resin composition tends to undergo strength decrease, coloration or the like.

The flexural strength retention rate of the biodegradable polyester resin composition of the present invention, after having been kept for an elapsed time of 840 hours under the conditions of 70°C and a relative humidity of 95%, can be made to be 80% or more. When the flexural strength retention rate is decreased to less than 80%, a molded body composed of the biodegradable polyester resin composition is deteriorated in the environment of use, and hence deformation and breakage of the molded body tends to occur.

In the present invention, the flexural strength retention rate is obtained as follows: a flexural-test specimen is prepared with injection molding by using a resin composition; the flexural strength of the specimen is measured before and after the humidity-heat test at 70°C and 95% RH on the basis of the ASTM-790; and from these strengths, the flexural strength retention rate is calculated. In this test, the humidity-heat test is performed at a high temperature capable of causing thermal deformation, and hence there is a possibility that the specimen is deformed to cause variation in the test results. Therefore, a flexural-test specimen having not yet been crystallized at the time of molding is subjected before the humidity-heat test to a treatment at 120°C for 30 minutes so as to be sufficiently crystallized, and then subjected to the humidity-heat test.

The above-described strength retention rate cannot be attained only by blocking the terminals of the biodegradable polyester resin with a carbodiimide compound, or only by adding a jojoba oil to the biodegradable polyester resin. However, the effect of attaining the above-described strength retention rate is obtained only when both of the terminal blocking and the jojoba oil addition are performed in combination according to the present invention.

In the method for producing a biodegradable polyester resin composition of the present invention, examples of the method for adding a carbodiimide compound and a jojoba oil to a biodegradable polyester resin include: a method for adding at the time of polymerizing the biodegradable polyester resin; a method for adding at the time of melt-kneading; and a method for adding at the time of molding a molded body by using a resin composition to which such addition has not yet been performed. Preferable among these methods are the method for adding at the time of melt-kneading and the method for adding at the time of molding on the grounds of the dispersibility of the carbodiimide compound and the jojoba oil, the simplicity of the manner of addition and other reasons. When these additives are added at the time of melt-kneading or molding, examples of the addition method include: a method for feeding to a common kneader or a common molding machine after these additives have been dry blended beforehand with the resin; and a method in which these additives are added midway through the kneading by using a side feeder. These methods enables the production of the biodegradable polyester resin composition of the present invention, blocked at the terminals thereof with a carbodiimide compound and made to contain a jojoba oil.

For melt-kneading, common kneaders such as a single screw extruder, a double screw extruder, a roll kneader and a Brabender kneader can be used. However, the improvement of the dispersibility by enhancing the kneading strength is an extremely important factor for the purpose of improving the hydrolytic resistance, and hence it is preferable to use a double screw extruder for the purpose of improving the concerned dispersibility. For the purpose of making higher the dispersibility of the carbodiimide compound and the jojoba oil at the time of melt-kneading, the double screw extruder preferably has a screw structure that augments the kneading of the resin.

When the biodegradable polyester resin composition of the present invention is produced by melt-kneading a biodegradable polyester resin, a carbodiimide compound and a jojoba oil, the kneading temperature is required to be equal to or higher than the melting point or the flow initiation temperature of the biodegradable polyester resin. The optimal range is varied depending on the applied resin; for example, for polylactic acid, optimal is a range from 180 to 230°C and more preferably a range from 190 to 220°C. When the kneading temperature is too low, the degradation of the fluidity of the resin tends to result in overload of the apparatus. Conversely, when the kneading temperature is too high, disadvantageously polylactic acid is decomposed and thus the obtained resin composition tends to undergo strength decrease, coloration or the like.

In the present invention, when a crosslinked structure is introduced into the biodegradable polyester resin, the terminal blocking and the crosslinking may be performed simultaneously or separately. When the terminal blocking and the crosslinking are performed simultaneously, a mixture composed of the biodegradable polyester resin, a carbodiimide compound, a (meth)acrylic acid ester compound and a peroxide has only to be melt-kneaded. When the terminal blocking and the crosslinking of the biodegradable polyester resin are performed separately, it is preferable to perform first the terminal blocking from the viewpoint of the improvement of the hydrolytic resistance. Specifically, preferably the biodegradable polyester resin and the carbodiimide compound are melt-kneaded together to block the terminals of the biodegradable polyester resin, and then the (meth)acrylic acid ester compound and the peroxide are added to the reaction mixture to be melt-kneaded to perform the crosslinking. In this case, after the terminals of the biodegradable polyester resin have been blocked, the reaction mixture is not taken out from the kneader, and the (meth)acrylic acid ester compound and the peroxide may be added successively from a midway position of the kneader. Alternatively, the biodegradable polyester resin in which the terminals thereof have been blocked is taken out of the kneader, and then the (meth)acrylic acid ester compound and the peroxide may be added to the biodegradable polyester resin to prepare a mixture and the mixture thus obtained may be placed into the kneader for another run of melt-kneading.

As long as the advantageous effects of the present invention are not impaired, the following various additives may be added to the biodegradable polyester resin composition of the present invention: a heat stabilizer, an antioxidant, a compound having reactivity with carboxyl group, a pigment, an antiweathering agent, a flame retardant, a plasticizer, a lubricant, a release agent, an antistatic agent, a filler and the like. Examples of the compounds and mixtures usable as the heat stabilizer and the antioxidant include a phosphite compound, a phenol compound, a benzotriazole compound, a triazine compound, a hindered amine compound, a sulfur compound, a copper compound, halides of alkali metals or the mixtures of these compounds. Examples of the usable compounds and mixtures having reactivity with carboxyl group include an epoxy compound, an isocyanate compound, an oxazoline compound or the mixtures of these compounds. In general, these additives are added at the time of melt-kneading or polymerization. Of the fillers, examples of the inorganic filler include talc, calcium carbonate, zinc carbonate, wollastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber, carbon fiber and a layered silicate. Of the fillers, examples of the organic filler include naturally-occurring polymers such as starch, cellulose fine particles, wood powder, bean curd refuse, rice hull, bran and kenaf, and the modified products of these.

As long as the advantageous effects of the present invention are not impaired, other resins may be added to the biodegradable polyester resin composition of the present invention. Examples of such a resin include polyamide (nylon), polyester amide, polyurethane, polyether, polyolefin, polystyrene, AS resin, ABS resin, polyacrylic acid, polyacrylic acid ester, polymethacrylic acid, polymethacrylic acid ester, polyethylene terephthalate, polytrimethylene terephthalate, polybutylene terephthalate, polyethylene naphthalate, polycarbonate and polyester carbonate. These components may be used each alone or in combinations of two or more thereof, and may be simply mixed with each other or may be copolymerized with each other.

The biodegradable polyester resin composition of the present invention can be molded into various molded bodies by the heretofore known molding methods such as injection molding, blow molding, extrusion molding and fiber molding.

As the injection molding method, in addition to a common injection molding method, there can be adopted a gas injection molding method, an injection press molding method and the like. The cylinder temperature in injection molding is required to be equal to or higher than the melting point or the flow initiation temperature of the biodegradable polyester resin composition, and the optimal range is varied depending on the applied resin. For example, the cylinder temperature for polylactic acid falls preferably in a range from 180 to 230°C, and more preferably in a range from 190 to 220°C. When the molding temperature is too low, molding failure or overload of the apparatus tends to occur due to the degradation of the fluidity of the resin. Conversely, when the molding temperature is too high, disadvantageously, polylactic acid is decomposed, and the obtained molded body undergoes strength decrease, coloration or the like. On the other hand, when the die temperature is set at a temperature equal to or lower than the glass transition temperature Tg of the resin composition, the die temperature is preferably (Tg - 10°C) or lower. Alternatively, in order to promote the crystallization of the resin composition for the purpose of improving the rigidity and heat resistance of the molded body, the die temperature may also be set at Tg or higher and (Tm - 30°C) or lower. The resin composition constituting the molded body may also be crystallized by heat treating the molded body in the above-described temperature range after the molded body is taken out from the die.

Molded bodies obtained by the injection molding method by using the resin composition of the present invention are particularly suitable for the following applications possibly undergoing high temperature and high humidity: resin components for use in automobiles such as bumpers, instrument panels and door trims; enclosures and parts for home electric appliances such as television sets, radio-cassette recorders, audio components, DVD decks, personal computers, stationary phones, cellular phones, and electric and electronic devices and instruments; and factory machine parts.

Examples of the blow molding method include a direct blow method in which molding is directly conducted from raw material chips and an injection blow molding method in which a preliminary molded body (bottomed parison) is first molded by injection molding and then the preliminary molded body is subjected to blow molding. Additionally, either of the following methods can be adopted: a hot parison method in which after molding of a preliminary molded body, successively blow molding is conducted, and a cold parison method in which a preliminary molded body is once cooled and taken out and then heated again to be subjected to blow molding. Molded bodies obtained with the blow molding method by using the resin composition obtained according to the present invention are particularly suitable for applications possibly undergoing high temperature and high humidity such as resin components for use in automobiles such as pipes and fuel tanks.

As the extrusion molding method, a T-die method, a round die method or the like may be applied. The extrusion molding temperature is required to be equal to or higher than the melting point or the flow initiation temperature of the biodegradable polyester resin composition. The optimal temperature range is varied depending on the applied resin; for example, for polylactic acid, the optimal temperature falls preferably in a range from 180 to 230°C and more preferably in a range from 190 to 220°C. When the molding temperature is too low, operation tends to be unstable or overload tends to occur. Conversely, when the molding temperature is too high, disadvantageously, the polylactic acid component is decomposed, and the extrusion molded body undergoes strength decrease, coloration or the like.

Extrusion molding enables to produce sheets, pipes and the like. Molded bodies obtained with the extrusion molding method by using the resin composition obtained according to the present invention are particularly suitable for applications involving repeated exposure to high temperature and high humidity such as table utensils, to be cleaned with automatic dishwashers, such as dishes, bowls, pots, chopsticks, spoons, forks and knives.

Other applications of the sheets or pipes obtained by the extrusion molding method include original sheets for use in deep-draw molding, original sheets for use in batch foaming, cards such as credit cards, sheets laid under writing paper, transparent file holders, straws, agricultural and gardening rigid pipes. Additionally, by further applying deep-draw molding such as vacuum molding, pneumatic molding or vacuum-pneumatic molding to sheets, there can be produced food containers, agricultural and gardening containers, blister pack containers, press-through pack containers and the like. The deep-draw molding temperature and the heat treatment temperature are preferably (Tg + 20°C) to (Tg + 100°C). When the deep-drawing temperature is lower than (Tg + 20°C), deep-drawing becomes difficult, and conversely, when the deep-drawing temperature exceeds (Tg + 100°C), the resin composition is decomposed, and thus thickness unevenness of the molded bodies is caused and orientation disorder of the resin composition is caused to decrease the impact resistance of the molded bodies, as the case may be. The forms of the food containers, agricultural and gardening containers, blister pack containers and press-through pack containers are not particularly limited, but are preferably deep-drawn as deep as 2 mm or more for the purpose of containing food, articles, chemicals and the like. The thickness of each of these containers is not particularly limited, but is preferably 50 $\mu$m or more and more preferably 150 to 500 $\mu$m from the viewpoint of strength. Specific examples of the food containers include fresh food trays, instant food containers, fast food containers and lunchboxes. Specific examples of the agricultural and gardening containers include seedling raising pots. Specific examples of the blister pack containers include packaging containers for various commercial products such as office articles, toys and dry batteries, as well as food.

Examples of the other molded bodies produced by using the biodegradable polyester resin composition of the present invention include: fluid containers; container caps; stationery articles such as rulers, writing materials, transparent cases and CD cases; daily commodities such as sink-corner strainers, trashes, basins, toothbrushes, combs and clothes hangers; agricultural and gardening materials such as flower pots and seedling raising pots; various toys such as plastic models; and resin components for use in electric appliances such as air conditioner panels and various enclosures.

As for the fluid containers, the forms thereof are not particularly limited, but are preferably molded as deep as 20 mm or more for the purpose of containing fluids. The thickness of each of these fluid containers is not particularly limited, but is preferably 0.1 mm or more and more preferably 0.1 to 5 mm from the viewpoint of strength. Examples of the fluid containers include: beverage cups and beverage bottles for dairy products, soft drinks, alcoholic beverages and the like; temporary preservation containers for seasonings such as soy sauce, sauce, mayonnaise, ketchup and edible oil; containers for shampoo, conditioners and the like; containers for cosmetics; and containers for agrichemicals.

The biodegradable polyester resin composition of the present invention can also be converted into fibers. The methods for producing such fibers are not particularly limited; however, preferable is a method in which melt spinning and stretching are performed. The melt spinning temperature is preferably 160°C to 260°C. When the melt spinning temperature is lower than 160°C, melt extrusion tends to be difficult. On the other hand, when the melt spinning temperature exceeds 250°C, the decomposition of the resin composition is remarkable and no high-strength fibers tend to be obtained. The melt spun fiber yarns may be stretched at a temperature equal to or higher than Tg so as to have the intended fiber diameter.

The fibers obtained by the above-described method are used as clothing fibers, industrial material fibers, short-fiber non-woven fabrics and the like. The fibers concerned are particularly suitable for applications possibly undergoing high temperature and high humidity as in the case of being used in cars.

The biodegradable polyester resin composition of the present invention can also be developed into long-fiber non-woven fabrics. The method for producing such long-fiber non-woven fabrics is not particularly limited; however, a method can be quoted in which a resin composition is spun into fibers by high-speed spinning, the obtained fibers are deposited and then fabricated into a web, and the web is further processed into a cloth by using a technique such as thermal compression bonding. The long-fiber non-woven fabrics thus obtained are particularly suitable for applications possibly undergoing high temperature and high humidity as in the case of being used in cars.

Examples

Hereinafter, the present invention is described more specifically with reference to Examples. It is to be noted that the present invention is not limited only to following Examples.

[Materials]

Hereinafter, the materials used in following Examples and Comparative Examples are described.

(1) Biodegradable polyester resins

PLA1: Polylactic acid (NatureWorks 4032D, manufactured by NatureWorks LLC), L-isomer/D-isomer = 98.6/1.4 (mol%), weight average molecular weight (Mw)= 170,000, melting point = 170°C, MFI = 2.5 g/10 min (190°C, load: 21.2 N (2.16 kg)), [COOH] = 22 mol/ton

PLA2: Polylactic acid (NatureWorks 6201D, manufactured by NatureWorks LLC), L-isomer/D-isomer = 98.7/1.3 (mol%), weight average molecular weight (Mw)= 140,000, melting point = 166°C, MFI = 8.0 g/10 min (190°C, load: 21.2 N (2.16 kg)), [COOH] = 30 mol/ton

PLA3: Polylactic acid (NatureWorks 4042D, manufactured by NatureWorks LLC), L-isomer/D-isomer = 96.0/4.0 (mol%), weight average molecular weight (Mw)= 160,000, melting point = 155°C, MFI = 3.0 g/10 min (190°C, load: 21.2 N (2.16 kg)), [COOH] = 20 mol/ton

PLA4: Polylactic acid resin (HV-6250H, manufactured by Unitika Ltd.), melting point = 167°C, MFI = 2.0 g/10 min (190°C, load: 21.2 N (2.16 kg)), [COOH] = 38 mol/ton

GSP: Polybutylene succinate (GSPla AD82W, manufactured by Mitsubishi Chemical Corp.), melting point = 110°C, MFR = 15 g/10 min (190°C, load: 21.2 N (2.16 kg)), [COOH] = 24 mol/ton

EFX: Aliphatic-aromatic copolymer polyester (Ecoflex F, manufactured by BASF Corp.), melting point = 115°C, [COOH] = 15 mol/ton

(2) Carbodiimide compounds

EN160: N,N'-Di-2,6-diisopropylphenylcarbodiimide (EN160, manufactured by Matsumoto Yushi-Seiyaku Co., Ltd.)

LA1: Polycarbodiimide (LA-1, manufactured by Nisshinbo Industries, Inc.)

STXI: N,N'-Di-2,6-diisopropylphenylcarbodiimide (Stabaxol I, manufactured by Rhein Chemie Corp.)

STXP: Polycarbodiimide (Stabaxol P, manufactured by Rhein Chemie Corp.)

(3) Jojoba oils

J1: Purified jojoba oil (JOJOBA, manufactured by Koei Kogyo Co., Ltd.), ester composed of higher unsaturated fatty acids and higher unsaturated alcohols, specific gravity: 0.865, melting point: 10°C

J2: Hydrogenated jojoba oil (HYDRO JOJOBA, manufactured by Koei Kogyo Co., Ltd.), a hydrogenated product of the above-described J1

(4) Crystal nucleating agents

N1: N,N'-Ethylenebis(12-hydroxystearic acid) amide (WX-1, manufactured by Kawaken Fine Chemicals Co., Ltd.)

N2: N,N',N''-Tricyclohexyl trimesic acid amide (TF-1, manufactured by New Japan Chemical Co., Ltd.)

N3: Octanedicarboxylic acid dibenzoylhydrazide (T-1287N, manufactured by Adeka Corp.)

N4: Sodium dimethyl 5-Sulfoisophthalate (manufactured by Tokyo Chemical Industry Co., Ltd.)

(5) Crosslinking agent (meth)acrylic acid ester compound

Ethylene glycol dimethacrylate (Blenmer PDE-50, manufactured by NOF Corp.)

(6)Peroxide

Di-t-butyl peroxide (Perbutyl D, manufactured by NOF Corp.)

(7) Antioxidants

Phenol compound (HP1): 4,4'-Butylidenebis(6-tert-butyl-3-methylphenol) (Adeka Stub AO-40, manufactured by Adeka Corp.)

Thioether compound (T1): Pentaerythritol tetrakis(3-dodecyl thiopropionate) (Seenox 412S, Shipuro Kasei Kaisha Ltd.)

[Evaluation methods]

Hereinafter, the measurement methods used for the evaluation of Examples and Comparative Examples are described.

(1) Carboxyl terminal group concentration: [COOH] (unit: [mol/ton])

To 20 ml of methylene chloride, 0.15 g of a resin composition was added and allowed to stand still for 1 hour. The solution thus obtained was titrated with a 0.1N benzyl alcohol solution of potassium hydroxide using phenol red as indicator, and the volume (ml) of the potassium hydroxide solution consumed for neutralization was represented by A. In the same manner, the titration of a solution system containing no resin composition was also performed, and the volume (ml) of the potassium hydroxide solution consumed for neutralization of this solution system was represented by B. The carboxyl terminal group concentration was obtained by using the values of A and B on the basis of the following formula.

$$[COOH] = (A - B) \times F \times 666$$

(In this formula, F stands for the factor of the potassium hydroxide solution.)

(2) Flexural strength

A molded piece of 127 mm(5 inches) x 12.7 mm(1/2 inch) x 3.2 mm(1/8 inch) was obtained by injection molding a resin composition. When a resin composition containing no crystal nucleating agent added therein or a resin composition not subjected to crosslinking treatment was used, a specimen was obtained by setting the die temperature at the time of molding at 15°C without performing crystallization, the specimen was subjected to annealing treatment, and the annealed specimen was used as a sample. When a resin composition containing a crystal nucleating agent added therein or a resin composition subjected to crosslinking treatment was used, a specimen was obtained by setting the die temperature at the time of molding at 110°C and by performing crystallization within the die, and the specimen thus obtained was used as a sample.
The flexural strength was measured by applying a load at a deformation rate of 1 mm/min according to the ASTM-790.
The preparation conditions of the specimen are as follows.
The injection molding conditions: In the injection molding, an injection molding machine (Model IS-80G, manufactured by Toshiba Machine Co., Ltd.) was used, the cylinder temperature was set at 190 to 160°C, the die temperature was set at 15°C (when no crystal nucleating agent was added or when no crosslinking treatment was performed) or 110°C (when a crystal nucleating agent was added or when a crosslinking treatment was performed), and a die for the 1/8-inch three-point bend specimen according to the ASTM standard was used.
The annealing treatment conditions: The annealing treatment was performed by heating in an oven set at 120°C for 30 minutes.

(3) Tensile strength (Example 18)

The tensile strength was measured by applying a load at a deformation speed of 500 mm/min according to the ASTM D-638. The preparation conditions of a specimen was the same as in the case of the above-described measurement of the (2) flexural strength. According to the conditions, as a specimen, an ASTM No. 1 dumbbell specimen of 175 mm (7 inches) in length and 3.2 mm (1/8 inch) in thickness was prepared.

(4) Humidity-heat test

By using a thermo-hygrostat (model IG400, manufactured by Yamato Science Co., Ltd.), the specimens prepared in the above-described (2) were subjected to a storage treatment in an environment of a temperature of 70°C and a relative humidity of 95%. Every about 170 hours, three specimens were collected, and subjected to the flexural strength measurement and the following exterior appearance evaluation.
The flexural strength retention rate (%) was calculated on the basis of the following formula.

$$(\text{Flexural strength retention rate}) = (\text{flexural strength after the humidity-heat test})/(\text{flexural strength before the humidity-heat test}) \times 100$$

(5) Exterior appearance evaluation (visual evaluation)

The above-described exterior appearance evaluation was performed by visual observation of the surface of each of the specimens. The evaluation standards were set as follows.

E(Excellent): Absolutely no change is observed.

G(Good): The surface is slightly whitened.

A(Average): The surface is changed in quality to be powdery.

P(Poor): Cracks occur, or deformation occurs.

Example 1

First, 100 parts by mass of a biodegradable polyester resin (PLA1), 4 parts by mass of a carbodiimide compound (EN160) and 2 parts by mass of a purified jojoba oil (J1) were dry blended together, and then melt-kneaded with a double screw extruder, model PCM-30, manufactured by Ikegai Corp. under the conditions of a temperature of 190°C and a screw rotation number of 150 rpm. After performing the melt-kneading, strands were extruded from a die with three holes of 0.4 mm in diameter, the strands were processed into pellets, the pellets were dried and thus a pellet-shaped resin composition was obtained.

Example 2

First, 100 parts by mass of a biodegradable polyester resin (PLA1) and 4 parts by mass of a carbodiimide compound (EN160) were dry blended together, and then fed to a double screw extruder, model PCM-30, manufactured by Ikegai Corp.; further, 5 parts by mass of a purified jojoba oil (J1) was injected with a metering feed pump, midway through the kneading step with a double screw extruder. Otherwise in the same manner as in Example 1, a resin composition was prepared.

Example 3

As a jojoba oil, a hydrogenated jojoba oil (J2) was used. Otherwise in the same manner as in Example 1, a resin composition was prepared.

Examples 4 to 7

When 100 parts by mass of a biodegradable polyester resin (PLA1), 4 parts by mass of a carbodiimide compound (EN160) and 2 parts by mass of a purified jojoba oil (J1) were dry blended together, crystal nucleating agents (N1 to N4) were added in an amount of 1 part by mass in Examples 4 to 7, respectively, as shown in Table 1. Otherwise in the same manner as in Example 1, a resin composition was prepared in each of Examples 4 to 7.

Example 8

First, 100 parts by mass of a biodegradable polyester resin (PLA2), 4 parts by mass of a carbodiimide compound (EN160) and 2 parts by mass of a purified jojoba oil (J1) were dry blended together. When the blended mixture was melt-kneaded in the same manner as in Example 1, a mixture composed of 0.1 part by mass of a crosslinking agent and 0.2 part by mass of a peroxide, and diluted with 0.7 part by mass of acetyl tributyl citrate was added with a metering feed pump midway through the kneading with a double screw extruder. Otherwise in the same manner as in Example 1, a resin composition was prepared.

Examples 9 and 10

A phenol compound (HP1) and a thioether compound (T1) were each added as an antioxidant in Examples 9 and 10, respectively, each in an amount of 0.2 part by mass. Otherwise in the same manner as in Example 1, a resin composition was prepared in each of Examples 9 and 10.

Examples 11 and 12

A biodegradable polyester resin (PLA3) was used in Example 11, and another biodegradable polyester resin (PLA4) was used in Example 12. Otherwise in the same manner as in Example 1, a resin composition was prepared in each of Examples 11 and 12.

Examples 13 to 15

In each of Examples 13 to 15, a carbodiimide compound other than EN160 was used, and otherwise in the same manner as in Example 1, a resin composition was prepared.

Examples 16 and 18

A resin (GSP) and another resin (EFX), each other than polylactic acid, were each used as a biodegradable polyester resin in Examples 16 and 18, respectively. Otherwise in the same manner as in Example 1, a resin composition was prepared in each of Examples 16 and 18.

Examples 17 and 19

A mixture prepared by blending polylactic acid (PLA1) with a resin (GSP) and a mixture prepared by blending polylactic acid (PLA1) with another resin (EFX) were each used as a biodegradable polyester resin in Examples 17 and 19, respectively, both resins (GSP, EFX) being other than polylactic acid. In each of Examples 17 and 19, the blending ratio was set at (polylactic acid)/(resin other than polylactic acid) = 80/20 in terms of mass ratio, and otherwise in the same manner as in Example 1, a resin composition was prepared.

Comparative Example 1

No jojoba oil was used. Otherwise in the same manner as in Example 1, a resin composition was prepared.

Comparative Example 2

No carbodiimide compound was used. Otherwise in the same manner as in Example 1, a resin composition was prepared.

Comparative Example 3

The amount of the jojoba oil was set at 0.05 part by mass. Otherwise in the same manner as in Example 1, a resin composition was prepared.

Comparative Example 4

The amount of the carbodiimide compound was set at 0.05 part by mass. Otherwise in the same manner as in Example 2, a resin composition was prepared.

Comparative Example 5

The amount of the jojoba oil was set at 0.05 part by mass. Otherwise in the same manner as in Example 4, a resin composition was prepared.

Comparative Example 6

The amount of the carbodiimide compound was set at 0.05 part by mass. Otherwise in the same manner as in Example 8, a resin composition was prepared.
Tables 1 to 3 show the carboxyl terminal group concentrations, physical properties and evaluation results of the humidity-heat test for the resin compositions obtained in Examples 1 to 19 and Comparative Examples 1 to 6.
[Table 1]

| | | Composition (parts by mass) | | | | | | | | | | | | [COOH] | After humidity-heat test: | | Flexural strength Flexural strength retention rate Exterior appearance | | | | (upper row, MPa) (middle row, %) (bottom row, visual evaluation) | | |
| | | Biodegradable polyester resin | | Carbodiimide compound | | Jojoba oil | | Crystal nucleating agent | | Cross-linking agent | Peroxide | Antioxidant | | | | | | | | | | | |
| | | Type | Amount | Type | Amount | Type | Amount | Type | Amount | | | Type | Amount | (mol/ton) | 0h | 170h | 340h | 500h | 680h | 840h | 1000h | 1170h | 1340h |
| Examples | 1 | PLA1 | 100 | EN160 | 4 | J1 | 2 | - | - | - | - | - | - | 0 | 91 | 89 | 89 | 92 | 93 | 93 | 87 | 83 | 85 |
| | | | | | | | | | | | | | | | 100 | 98 | 98 | 100 | 100 | 100 | 96 | 91 | 93 |
| | | | | | | | | | | | | | | | E | E | E | E | E | E | E | E | E |
| | 2 | PLA1 | 100 | EN160 | 4 | J1 | 5 | - | - | - | - | - | - | 0 | 84 | 84 | 85 | 86 | 83 | 84 | 82 | 78 | 72 |
| | | | | | | | | | | | | | | | 100 | 100 | 100 | 100 | 99 | 100 | 98 | 93 | 86 |
| | | | | | | | | | | | | | | | E | E | E | E | E | E | E | E | E |
| | 3 | PLA1 | 100 | EN160 | 4 | J2 | 2 | - | - | - | - | - | - | 0 | 90 | 89 | 88 | 92 | 91 | 90 | 85 | 82 | 81 |
| | | | | | | | | | | | | | | | 100 | 99 | 98 | 102 | 101 | 100 | 94 | 91 | 90 |
| | | | | | | | | | | | | | | | E | E | E | E | E | E | E | E | E |
| | 4 | PLA1 | 100 | EN160 | 4 | J1 | 2 | N1 | 1 | - | - | - | - | 0 | 93 | 87 | 89 | 88 | 88 | 85 | 85 | 78 | 75 |
| | | | | | | | | | | | | | | | 100 | 94 | 96 | 94 | 94 | 91 | 91 | 84 | 81 |
| | | | | | | | | | | | | | | | E | E | E | E | E | E | E | G | G |
| | 5 | PLA1 | 100 | EN160 | 4 | J1 | 2 | N2 | 1 | - | - | - | - | 0 | 90 | 90 | 89 | 85 | 88 | 87 | 85 | 81 | 76 |
| | | | | | | | | | | | | | | | 100 | 100 | 99 | 95 | 98 | 97 | 95 | 89 | 84 |
| | | | | | | | | | | | | | | | E | E | E | E | E | E | E | G | G |
| | 6 | PLA1 | 100 | EN160 | 4 | J1 | 2 | N3 | 1 | - | - | - | - | 0 | 90 | 88 | 88 | 87 | 85 | 86 | 81 | 82 | 78 |
| | | | | | | | | | | | | | | | 100 | 97 | 97 | 96 | 94 | 95 | 90 | 91 | 87 |
| | | | | | | | | | | | | | | | E | E | E | E | E | E | E | E | G |
| | 7 | PLA1 | 100 | EN160 | 4 | J1 | 2 | N4 | 1 | - | - | - | - | 0 | 94 | 90 | 91 | 91 | 90 | 89 | 87 | 83 | 75 |
| | | | | | | | | | | | | | | | 100 | 96 | 97 | 97 | 96 | 95 | 93 | 88 | 80 |
| | | | | | | | | | | | | | | | E | E | E | E | E | E | E | G | G |
| | 8 | PLA2 | 100 | EN160 | 4 | J1 | 2 | - | - | 0.1 | 0.2 | - | - | 0 | 95 | 90 | 93 | 92 | 88 | 88 | 84 | 81 | 79 |
| | | | | | | | | | | | | | | | 100 | 95 | 98 | 97 | 93 | 93 | 89 | 86 | 84 |
| | | | | | | | | | | | | | | | E | E | E | E | E | E | E | G | G |
| | 9 | PLA1 | 100 | EN160 | 4 | J1 | 2 | - | - | - | - | HP1 | 0.2 | 0 | 90 | 91 | 90 | 90 | 88 | 88 | 89 | 88 | 84 |
| | | | | | | | | | | | | | | | 100 | 101 | 100 | 100 | 98 | 98 | 99 | 98 | 94 |
| | | | | | | | | | | | | | | | E | E | E | E | E | E | E | E | E |
| | 10 | PLA1 | 100 | EN160 | 4 | J1 | 2 | - | - | - | - | T1 | 0.2 | 0 | 91 | 93 | 90 | 88 | 89 | 88 | 86 | 87 | 88 |
| | | | | | | | | | | | | | | | 100 | 102 | 99 | 97 | 98 | 97 | 95 | 96 | 96 |
| | | | | | | | | | | | | | | | E | E | E | E | E | E | E | E | E |

14

[Table 2]

<table>
<tr><td colspan="2" rowspan="3"></td><td colspan="15">Composition (parts by mass)</td><td rowspan="3">[COOH]<br>(mol/ton)</td><td colspan="9">After humidity-heat test: Flexural strength (upper row, MPa)<br>Flexural strength retention rate (middle row, %)<br>Exterior appearance (bottom row, visual evaluation)</td></tr>
<tr><td colspan="2">Biodegradable polyester resin</td><td colspan="2">Carbodiimide compound</td><td colspan="2">Jojoba oil</td><td colspan="2">Crystal nucleating agent</td><td rowspan="2">Cross-linking agent</td><td rowspan="2">Peroxide</td><td colspan="2">Antioxidant</td><td rowspan="2">0h</td><td rowspan="2">170h</td><td rowspan="2">340h</td><td rowspan="2">500h</td><td rowspan="2">680h</td><td rowspan="2">840h</td><td rowspan="2">1000h</td><td rowspan="2">1170h</td><td rowspan="2">1340h</td></tr>
<tr><td>Type</td><td>Amount</td><td>Type</td><td>Amount</td><td>Type</td><td>Amount</td><td>Type</td><td>Amount</td><td>Type</td><td>Amount</td></tr>
<tr><td rowspan="27">Examples</td><td rowspan="3">11</td><td rowspan="3">PLA3</td><td rowspan="3">100</td><td rowspan="3">EN160</td><td rowspan="3">4</td><td rowspan="3">J1</td><td rowspan="3">2</td><td rowspan="3">-</td><td rowspan="3">-</td><td rowspan="3">-</td><td rowspan="3">-</td><td rowspan="3">-</td><td rowspan="3">-</td><td rowspan="3">0</td><td>90</td><td>90</td><td>92</td><td>88</td><td>85</td><td>80</td><td>75</td><td>70</td><td>65</td></tr>
<tr><td>100</td><td>100</td><td>102</td><td>98</td><td>94</td><td>89</td><td>83</td><td>78</td><td>72</td></tr>
<tr><td>E</td><td>E</td><td>E</td><td>E</td><td>E</td><td>E</td><td>E</td><td>G</td><td>A</td></tr>
<tr><td rowspan="3">12</td><td rowspan="3">PLA4</td><td rowspan="3">100</td><td rowspan="3">EN160</td><td rowspan="3">4</td><td rowspan="3">J1</td><td rowspan="3">2</td><td rowspan="3">-</td><td rowspan="3">-</td><td rowspan="3">-</td><td rowspan="3">-</td><td rowspan="3">-</td><td rowspan="3">-</td><td rowspan="3">0</td><td>95</td><td>96</td><td>93</td><td>93</td><td>92</td><td>90</td><td>91</td><td>90</td><td>90</td></tr>
<tr><td>100</td><td>101</td><td>98</td><td>98</td><td>97</td><td>95</td><td>96</td><td>95</td><td>95</td></tr>
<tr><td>E</td><td>E</td><td>E</td><td>E</td><td>E</td><td>E</td><td>E</td><td>E</td><td>E</td></tr>
<tr><td rowspan="3">13</td><td rowspan="3">PLA1</td><td rowspan="3">100</td><td rowspan="3">LA1</td><td rowspan="3">4</td><td rowspan="3">J1</td><td rowspan="3">2</td><td rowspan="3">-</td><td rowspan="3">-</td><td rowspan="3">-</td><td rowspan="3">-</td><td rowspan="3">-</td><td rowspan="3">-</td><td rowspan="3">0</td><td>90</td><td>85</td><td>80</td><td>78</td><td>75</td><td>72</td><td>65</td><td>50</td><td>40</td></tr>
<tr><td>100</td><td>94</td><td>89</td><td>87</td><td>83</td><td>80</td><td>72</td><td>56</td><td>44</td></tr>
<tr><td>E</td><td>E</td><td>E</td><td>G</td><td>G</td><td>A</td><td>P</td><td>P</td></tr>
<tr><td rowspan="3">14</td><td rowspan="3">PLA1</td><td rowspan="3">100</td><td rowspan="3">STX1</td><td rowspan="3">4</td><td rowspan="3">J1</td><td rowspan="3">2</td><td rowspan="3">-</td><td rowspan="3">-</td><td rowspan="3">-</td><td rowspan="3">-</td><td rowspan="3">-</td><td rowspan="3">-</td><td rowspan="3">0</td><td>91</td><td>90</td><td>90</td><td>91</td><td>90</td><td>92</td><td>91</td><td>90</td><td>92</td></tr>
<tr><td>100</td><td>99</td><td>99</td><td>100</td><td>99</td><td>101</td><td>100</td><td>99</td><td>101</td></tr>
<tr><td>E</td><td>E</td><td>E</td><td>E</td><td>E</td><td>E</td><td>E</td><td>E</td><td>E</td></tr>
<tr><td rowspan="3">15</td><td rowspan="3">PLA1</td><td rowspan="3">100</td><td rowspan="3">STXP</td><td rowspan="3">4</td><td rowspan="3">J1</td><td rowspan="3">2</td><td rowspan="3">-</td><td rowspan="3">-</td><td rowspan="3">-</td><td rowspan="3">-</td><td rowspan="3">-</td><td rowspan="3">-</td><td rowspan="3">0</td><td>92</td><td>91</td><td>92</td><td>91</td><td>90</td><td>85</td><td>80</td><td>73</td><td>70</td></tr>
<tr><td>100</td><td>99</td><td>100</td><td>99</td><td>98</td><td>92</td><td>95</td><td>89</td><td>84</td></tr>
<tr><td>E</td><td>E</td><td>E</td><td>E</td><td>E</td><td>E</td><td>G</td><td>A</td><td>A</td></tr>
<tr><td rowspan="3">16</td><td rowspan="3">GSP</td><td rowspan="3">100</td><td rowspan="3">EN160</td><td rowspan="3">4</td><td rowspan="3">J1</td><td rowspan="3">2</td><td rowspan="3">-</td><td rowspan="3">-</td><td rowspan="3">-</td><td rowspan="3">-</td><td rowspan="3">-</td><td rowspan="3">-</td><td rowspan="3">0</td><td>20</td><td>19</td><td>21</td><td>18</td><td>18</td><td>17</td><td>16</td><td>16</td><td>10</td></tr>
<tr><td>100</td><td>95</td><td>105</td><td>90</td><td>90</td><td>85</td><td>80</td><td>80</td><td>50</td></tr>
<tr><td>E</td><td>E</td><td>E</td><td>E</td><td>E</td><td>E</td><td>G</td><td>G</td><td>P</td></tr>
<tr><td rowspan="3">17</td><td rowspan="3">GSP<br>PLA1</td><td rowspan="3">20<br>80</td><td rowspan="3">EN160</td><td rowspan="3">4</td><td rowspan="3">J1</td><td rowspan="3">2</td><td rowspan="3">-</td><td rowspan="3">-</td><td rowspan="3">-</td><td rowspan="3">-</td><td rowspan="3">-</td><td rowspan="3">-</td><td rowspan="3">0</td><td>75</td><td>74</td><td>73</td><td>74</td><td>72</td><td>70</td><td>69</td><td>68</td><td>60</td></tr>
<tr><td>100</td><td>99</td><td>97</td><td>99</td><td>96</td><td>93</td><td>92</td><td>91</td><td>80</td></tr>
<tr><td>E</td><td>E</td><td>E</td><td>E</td><td>E</td><td>E</td><td>E</td><td>E</td><td>G</td></tr>
<tr><td rowspan="3">18</td><td rowspan="3">EFX</td><td rowspan="3">100</td><td rowspan="3">EN160</td><td rowspan="3">4</td><td rowspan="3">J1</td><td rowspan="3">2</td><td rowspan="3">-</td><td rowspan="3">-</td><td rowspan="3">-</td><td rowspan="3">-</td><td rowspan="3">-</td><td rowspan="3">-</td><td rowspan="3">0</td><td>*19</td><td>18</td><td>18</td><td>18</td><td>17</td><td>16</td><td>10</td><td>-</td><td>-</td></tr>
<tr><td>100</td><td>95</td><td>95</td><td>95</td><td>89</td><td>84</td><td>53</td><td>-</td><td>-</td></tr>
<tr><td>E</td><td>E</td><td>E</td><td>E</td><td>E</td><td>G</td><td>A</td><td>P</td><td>P</td></tr>
<tr><td rowspan="3">19</td><td rowspan="3">EFX<br>PLA1</td><td rowspan="3">20<br>80</td><td rowspan="3">EN160</td><td rowspan="3">4</td><td rowspan="3">J1</td><td rowspan="3">2</td><td rowspan="3">-</td><td rowspan="3">-</td><td rowspan="3">-</td><td rowspan="3">-</td><td rowspan="3">-</td><td rowspan="3">-</td><td rowspan="3">0</td><td>60</td><td>59</td><td>62</td><td>61</td><td>60</td><td>54</td><td>50</td><td>35</td><td>25</td></tr>
<tr><td>100</td><td>98</td><td>103</td><td>102</td><td>100</td><td>90</td><td>83</td><td>58</td><td>42</td></tr>
<tr><td>E</td><td>E</td><td>E</td><td>E</td><td>E</td><td>E</td><td>G</td><td>P</td><td>P</td></tr>
</table>

-: Not measurable due to too low strength

* Example 18: Tensile strength measured according to ASTM D-638

[Table 3]

| | | Composition (parts by mass) | | | | | | | | | | | | [COOH] | After humidity-heat test: | | Flexural strength<br>Flexural strength retention rate<br>Exterior appearance | | | | (upper row, MPa)<br>(middle row, %)<br>(bottom row, visual evaluation) | | | |
|---|---|---|---|---|---|---|---|---|---|---|---|---|---|---|---|---|---|---|---|---|---|---|---|---|
| | | Biodegradable polyester resin | | Carbodiimide compound | | Jojoba oil | | Crystal nucleating agent | | Cross-linking agent | Peroxide | Antioxidant | | | | | | | | | | | | |
| | | Type | Amount | Type | Amount | Type | Amount | Type | Amount | | | Type | Amount | (mol/ton) | 0h | 170h | 340h | 500h | 680h | 840h | 1000h | 1170h | 1340h | |
| Comparative Examples | 1 | PLA1 | 100 | EN160 | 4 | - | - | - | - | - | - | - | - | 0 | 121 | 118 | 116 | 111 | 103 | 89 | 87 | - | - | |
| | | | | | | | | | | | | | | | 100 | 98 | 96 | 91 | 85 | 74 | 72 | - | - | |
| | | | | | | | | | | | | | | | E | E | E | E | G | G | A | A | P | |
| | 2 | PLA1 | 100 | - | - | J1 | 2 | - | - | - | - | - | - | 22 | 88 | - | - | - | - | - | - | - | - | |
| | | | | | | | | | | | | | | | 100 | - | - | - | - | - | - | - | - | |
| | | | | | | | | | | | | | | | E | P | P | P | P | P | P | P | P | |
| | 3 | PLA1 | 100 | EN160 | 4 | J1 | 0.05 | - | - | - | - | - | - | 0 | 119 | 118 | 112 | 108 | 105 | 88 | 85 | - | - | |
| | | | | | | | | | | | | | | | 100 | 99 | 94 | 91 | 88 | 74 | 71 | - | - | |
| | | | | | | | | | | | | | | | E | E | E | E | G | G | A | A | P | |
| | 4 | PLA1 | 100 | EN160 | 0.05 | J1 | 5 | - | - | - | - | - | - | 24 | 88 | - | - | - | - | - | - | - | - | |
| | | | | | | | | | | | | | | | 100 | - | - | - | - | - | - | - | - | |
| | | | | | | | | | | | | | | | E | P | P | P | P | P | P | P | P | |
| | 5 | PLA1 | 100 | EN160 | 4 | J1 | 0.05 | N1 | 1 | - | - | - | - | 0 | 119 | 116 | 111 | 108 | 105 | 92 | 83 | - | - | |
| | | | | | | | | | | | | | | | 100 | 97 | 93 | 91 | 88 | 77 | 70 | - | - | |
| | | | | | | | | | | | | | | | E | E | E | E | G | G | A | A | P | |
| | 6 | PLA2 | 100 | EN160 | 0.05 | J1 | 2 | - | - | 0.1 | 0.2 | - | - | 40 | 89 | - | - | - | - | - | - | - | - | |
| | | | | | | | | | | | | | | | 100 | - | - | - | - | - | - | - | - | |
| | | | | | | | | | | | | | | | E | P | P | P | P | P | P | P | P | |

-: Not measurable due to too low strength

As shown in Tables 1 to 3, the resin compositions of Examples 1 to 19 were all low in the carboxyl terminal group concentration, and were improved in hydrolytic resistance, by using a carbodiimide compound and a jojoba oil in combination with a biodegradable polyester resin, as compared to the resin compositions of Comparative Examples 1 to 6. Additionally, all Examples enabled the long-term retention of satisfactory exterior appearance.

Specifically, the strength retention rate in Example 1 exceeded 80% even after the elapsed time of 1340 hours, whereas the strength retention rate in Comparative Example 1, was reduced to be less than 80% in 840 hours.

In each of Comparative Examples 2, 4 and 6, the addition amount of the carbodiimide compound did not fall within an appropriate range, and hence the amount of the residual carboxyl terminal groups was large and no intended improvement of the hydrolytic resistance was attained.

The reason for the improvement of the hydrolytic resistance due to the use of a carbodiimide compound and a jojoba oil in combination is not clear; however, the difference between the resin compositions of Example 1 and Comparative Example 1 resides only in the presence or absence of a jojoba oil. Consequently, it can be seen that when the hydrolytic resistance is improved by using a carbodiimide compound, the use of a jojoba oil in an appropriate amount in combination enables further improvement of the intended hydrolytic resistance of a polyester resin composition. Therefore, it can be stated that the addition of a jojoba oil is an extremely important factor.

As described in Table 1, no remarkable difference in the transition of the strength retention rate with elapsed time and no remarkable difference in the transition of the exterior appearance with elapsed time were found among Examples 1 to 8. The difference between Examples 1 to 3, Examples 4 to 7 and Examples 8 resided in the difference in the technique for crystallizing the sample. Specifically, Examples 1 to 3 each involved a crystallization technique by an annealing treatment; Examples 4 to 7 each involved a crystallization technique in which a crystal nucleating agent was added in the resin composition, thus the crystallization speed of the resin composition was increased, and the resin composition was crystallized inside the die at the time of injection molding; and Example 8 involved a crystallization technique in which a crosslinking agent and a peroxide were added at the time of melt-kneading, thus the crystallization speed of the resin composition was increased, and the resin composition was crystallized inside the die at the time of injection molding. Although these Examples were different in the crystallization technique, these Examples were not different from each other with respect to the improvement effect of the hydrolytic resistance, and hence all the techniques involved in these Examples were able to be preferably used.

## Claims

1. A biodegradable polyester resin composition,
   wherein 100 parts by mass of a biodegradable polyester resin is blocked at terminals thereof with 0.1 to 10 parts by mass of a carbodiimide compound; and
   the biodegradable polyester resin composition comprises 0.1 to 10 parts by mass of a jojoba oil in relation to 100 parts by mass of the biodegradable polyester resin.

2. The biodegradable polyester resin composition according to claim 1, further comprising 0.03 to 5 parts by mass of a crystal nucleating agent in relation to 100 parts by mass of the biodegradable polyester resin.

3. The biodegradable polyester resin composition according to claim 2, wherein the crystal nucleating agent is composed of one or more selected from an organic amide compound, an organic hydrazide compound, a carboxylic acid ester compound, an organic sulfonic acid salt, a phthalocyanine compound, a melamine compound and an organic phosphonic acid salt.

4. The biodegradable polyester resin composition according to claim 2, wherein the crystal nucleating agent is composed of one or more selected from a metal salt of dimethyl 5-sulfoisophthalate, N,N',N"-tricyclohexyl trimesic acid amide, N,N'-ethylenebis(12-hydroxystearic acid) amide and octane dicarboxylic acid dibenzoylhydrazide.

5. The biodegradable polyester resin composition according to claim 1, wherein 100 parts by mass of the biodegradable polyester resin is crosslinked by 0.05 to 10 parts by mass of a (meth)acrylic acid ester compound and 0.1 to 20 parts by mass of a peroxide.

6. The biodegradable polyester resin composition according to claim 1, wherein a flexural strength retention rate of the biodegradable polyester resin composition is 80% or more when the biodegradable polyester resin composition has been maintained for 840 hours under conditions of 70°C and a relative humidity of 95%.

7. A molded body formed of the biodegradable polyester resin composition according to any one of claims 1 to 6.

8. A method for producing a biodegradable polyester resin composition, wherein when the biodegradable polyester resin composition according to any one of claims 1 to 6 is produced, a carbodiimide compound and a jojoba oil are added to the biodegradable polyester resin at a time of melt-kneading or at a time of molding a molded body by using a resin composition to which the carbodiimide compound and the jojoba oil are not added.

## INTERNATIONAL SEARCH REPORT

| | International application No. |
|---|---|
| | PCT/JP2009/000586 |

**A. CLASSIFICATION OF SUBJECT MATTER**
*C08L67/00*(2006.01)i, *C08K5/00*(2006.01)i, *C08K5/101*(2006.01)i, *C08K5/29*(2006.01)i, *C08L101/16*(2006.01)n

According to International Patent Classification (IPC) or to both national classification and IPC

**B. FIELDS SEARCHED**

Minimum documentation searched (classification system followed by classification symbols)
C08L67/00, C08K5/00, C08K5/101, C08K5/29, C08L101/16

Documentation searched other than minimum documentation to the extent that such documents are included in the fields searched
Jitsuyo Shinan Koho       1922-1996    Jitsuyo Shinan Toroku Koho  1996-2009
Kokai Jitsuyo Shinan Koho 1971-2009    Toroku Jitsuyo Shinan Koho  1994-2009

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| Y | WO 2007/029574 A1 (Unitika Ltd.), 15 March, 2007 (15.03.07), Claims & EP 1923427 A1        & CN 101218297 A & KR 10-2008-049006 A | 1-8 |
| Y | JP 2001-261797 A (Toray Industries, Inc.), 26 September, 2001 (26.09.01), Claims; Par. No. [0017] (Family: none) | 1,6-8 |
| Y | JP 2007-308650 A (Kao Corp.), 29 November, 2007 (29.11.07), Claims; Par. Nos. [0024], [0041], [0042] (Family: none) | 1-4,6-8 |

| ☒ Further documents are listed in the continuation of Box C. | ☐ See patent family annex. |
|---|---|

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 April, 2009 (07.04.09) | 21 April, 2009 (21.04.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/000586

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2005/068554 A1 (Takemoto Oil & Fat Co., Ltd., Toyota Motor Corp.), 28 July, 2005 (28.07.05), Claims & EP 1707598 A1 & US 2007/0270535 A1 & CN 1910236 A | 2-4,6-8 |
| Y | JP 2008-001786 A (Unitika Ltd.), 10 January, 2008 (10.01.08), Claims (Family: none) | 2-4,6-8 |
| Y | WO 2006/132187 A1 (Unitika Ltd.), 14 December, 2006 (14.12.06), Claims & EP 1889875 A1 & CN 101128535 A & KR 10-2008-0012833 A | 2-8 |
| Y | WO 2007/142106 A1 (Unitika Ltd.), 13 December, 2007 (13.12.07), Claims; Par. Nos. [0036] to [0038] (Family: none) | 5-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001261797 A
- JP 2004155993 A
- WO 2007029574 A